# EUROPEAN PATENT SPECIFICATION

(11) **EP 3 384 380 B1**
(45) Date of publication and mention of the grant of the patent: **20.04.2022**
(21) Application number: 16871141.4
(22) Date of filing: 08.07.2016
(51) Int. Cl.: G06F 9/448, G06F 9/50, G06F 11/14, G06Q 10/06, G06F 8/10, G06F 8/36, G06F 8/30, H04L 41/0806, H04L 41/5041, H04L 41/5054, H04L 41/14

(54) **METHOD AND APPARATUS FOR DECLARATIVE ACTION ORCHESTRATION**
VERFAHREN UND VORRICHTUNG ZUR DEKLARATIVEN AKTIONSORCHESTRIERUNG
PROCÉDÉ ET APPAREIL D'ORCHESTRATION D'ACTIONS DÉCLARATIVES

(30) Priority: 30.11.2015 US 201562260884 P
(43) Date of publication of application: 10.10.2018
(73) Proprietor: Telefonaktiebolaget LM Ericsson (publ), 164 83 Stockholm (SE)
(72) Inventor: KARLSSON, Pär, 371 93 Karlskrona (SE); GULLIN, Patrick, 385 31 Torsås (SE); KARLSSON, Stefan, 371 32 Karlskrona (SE)
(74) Representative: Zacco Sweden AB
(86) International application number: PCT/SE2016/050704
(87) International publication number: WO 2017/095290

(56) References cited:
- WO-A1-2015/116155
- WO-A2-01/16723
- WO-A2-01/16726
- US-A1- 2004 226 051
- US-A1- 2006 053 195
- US-A1- 2006 074 732
- US-A1- 2011 103 566

## Description

### TECHNICAL FIELD

The present solution relates to methods, systems, a computer program and a computer program product for declarative action orchestration, in particular activation actions orchestration.

### BACKGROUND

Service providers may offer a variety of services to customers. For example, a customer may be provided with the option of obtaining a wired telephone-based service, a wireless telephone-based service, a data networking-based service (wired or wireless), a television-based service, etc. To obtain such a service from the service provider, the customer may submit an order for the desired service. Once submitted, the service may be activated prior to the customer being able to use the service.

A current service provisioning architecture includes a Business Support System (BSS), a provisioning gateway - also referred to as a provisioning platform, and a group of service enablers. In operation, the BSS may provide information for a service order to the provisioning gateway, which acts to provide the appropriate information to the appropriate service enablers for activating the ordered service.

Activation of (user) data in the network domain is becoming increasingly complex. More and more services with diverse data models are introduced, no standardization is in place between vendors, and to support business agility a simple way to rapidly adapt fulfillment flows at a low cost is needed.

To this end it is expected a too complex task to develop the needed activation logic as a traditional coding effort as this requires access to skilled developers and/or a long development time.

Previous solutions seek to address the problem by raising the abstraction level of programming, typically to the level of doing the programming in some graphical language. One such example is Business Process Modeling (BPM) that has been around for 10-15 years. The purpose with BPM is to avoid low level programming and instead use a higher abstraction level to orchestrate workflows and service usage. However, BPM still builds on an imperative style of programming. The tools for providing this are often based on the standardized Business Process Modeling Notation (BPMN).

BPMN at its core is an imperative approach - the user (developer) is forced to dictate how the processing should take place, step by step, this leads to several limitations:
1) A human user gets unavoidably involved in the low level problem of what should happen in what order instead of focusing on the wanted end result to be achieved. If the execution is to be split into parallel work items in order to utilize parallelism the user must specify this explicitly and to insert it into the flow of actions when all input to those work items are available.
2) A consequence of specifying the processing flow is that the execution engine is limited with respect to possible optimizations of the execution. An example can be reordering of actions and parallel execution of actions.
3) Tasks like recovering from failures quickly become overly complex, in particular if parallel execution of (otherwise) independent activities is to take place. An imperative approach requires handcrafting code to recover or roll-back from failures at any state in the execution. If parallel execution is allowed the number of possible states grows very rapidly with the number of tasks involved. The most common way to solve this is to not allow or severely limit parallel execution. US 2011/103566 A1 describes a background art of automated provisioning. US 2006/074732 A1 describes a background art of componentized and extensible workflow model. WO 2015/116155 A1 describes a background art of method and apparatus for managing workflows for communication network provisioning.

### SUMMARY

The invention is defined by the independent claims. Furthermore, embodiments of the invention are defined by the claims. Moreover, examples, embodiments and descriptions, which are not covered by the claims are presented not as embodiments of the invention, but as background art or examples useful for understanding the invention. It is an object of the invention to provide a method, an Activation Node, a computer program and a computer program product for orchestration of activation actions mitigating the above mentioned limitations.

A first aspect of the invention relates to a method performed by a service provisioning platform for activating services in a communication system. The service provisioning platform orchestrates activation actions each comprising an execute logic. The method comprises deploying or fetching a specification that is organizing the activation of the services actions according to their dependencies, to be used for orchestrating execution of the activation actions; wherein the specification is built during a design time and the specification includes declarations of explicit static execution order between activation of the actions in order to make them run sequentially; wherein the activation of a service depends on several other activation of the actions to be ready before being allowed to execute; receiving an activation request; matching the activation request with a specific flow of activation actions to be executed in in-accordance with the specification; and executing the execute logic of the flow of activation actions ordered based on the dependencies between the data models. The activation of the service action further comprises an undo logic; and the method further comprising the steps: executing the undo logic, when the execution of the execute logic of the flow of the activation of the actions has failed and deciding that an action has failed; propagating action failure information in the order of the flow of the activation of the actions until it has reached all actions of the flow; triggered by the propagated action failure information, for each action of the flow of activation of the actions, starting from the last actions of the flow of the activation of the actions and in opposite order of the execution start order of the execute logic, deciding if it is to undo its execute logic and if so executing the undo logic; and confirming to its predecessor thereby enabling the predecessor to execute its undo logic.

An advantage is that an imperative way of specifying the logic and manually defining its level of parallelism in different situations is avoided.

A second aspect of the invention relates a service provisioning platform for activating services in a communication system. The service provisioning platform orchestrates activation actions each comprising an execute logic. The service provisioning platform is adapted to deploy or fetch a specification that is organizing the activation of the services actions according to their dependencies, to be used for orchestrating execution of the activation actions; receive an activation request; match the activation request with a specific flow of activation actions to be executed in in accordance with the specification; and execute the execute logic of the flow of activation actions ordered based on the dependencies between the data models. The activation of the service further comprises an undo logic and the service provisioning platform is further adapted to: execute the undo logic, when the execution of the execute logic of the flow of the activation of the actions has failed and deciding that an action has failed; propagate action failure information in the order of the flow of the activation of the actions until it has reached all actions of the flow; triggered by the propagated action failure information, for each action of the flow of activation of the actions, starting from the last actions of the flow of the activation of the actions and in opposite order of the execution start order of the execute logic, decide if it is to undo its execute logic and if so executing the undo logic; and confirm to its predecessor thereby enabling the predecessor to execute its undo logic.

A fifth aspect of the invention relates to a computer program containing comprising computer readable code means. When run in a computer being configured as a service provisioning platform for activating services in a communication system, the computer readable code means causes the computer to deploy or fetch a specification that is organizing the activation of the services actions according to their dependencies, to be used for orchestrating execution of the activation actions; receive an activation request; match the activation request with a specific flow of activation actions to be executed in in accordance with the specification; and execute the execute logic of the flow of activation actions ordered based on the dependencies between the data models. The activation of the service action further comprises an undo logic and the computer readable code means causes the computer to perform the following steps: execute the undo logic, when the execution of the execute logic of the flow of the activation of the actions has failed and deciding that an action has failed; propagate action failure information in the order of the flow of the activation of the actions until it has reached all actions of the flow; triggered by the propagated action failure information, for each action of the flow of activation of the actions, starting from the last actions of the flow of the activation of the actions and in opposite order of the execution start order of the execute logic, decide if it is to undo its execute logic and if so executing the undo logic; and confirm to its predecessor thereby enabling the predecessor to execute its undo logic.

A sixth aspect of the invention relates to a computer program product comprising a computer readable medium and a computer program stored on the computer readable medium. When run in a computer being configured as a service provisioning platform for activating services in a communication system, the computer readable code means causes the computer to deploy or fetch a specification that is organizing the activation of the services actions according to their dependencies, to be used for orchestrating execution of the activation actions; receive an activation request; match the activation request with a specific flow of activation actions to be executed in in accordance with the specification; and execute the execute logic of the flow of activation actions ordered based on the dependencies between the data models. The activation of the service action further comprises an undo logic and the computer readable code means causes the computer to perform the following steps: execute the undo logic, when the execution of the execute logic of the flow of the activation of the actions has failed and deciding that an action has failed; propagate action failure information in the order of the flow of the activation of the actions until it has reached all actions of the flow; triggered by the propagated action failure information, for each action of the flow of activation of the actions, starting from the last actions of the flow of the activation of the actions and in opposite order of the execution start order of the execute logic, decide if it is to undo its execute logic and if so executing the undo logic; and confirm to its predecessor thereby enabling the predecessor to execute its undo logic.

Embodiments of the invention will now be described in more detail with reference to the enclosed drawings.

### BRIEF DESCRIPTION OF THE DRAWINGS

FIGURE 1 shows an overview of a system for action orchestration.
FIGURE 2 shows solution visualization of dependencies between data models.
FIGURE 3 shows an exemplary system in which systems and/or methods described herein may be implemented
FIGURE 4 shows an Activator in its environment.
FIGURE 5 shows an example of execution dependencies through data reference declaration.
FIGURE 6A and 6B shows examples of action order and referencing possibilities.
FIGURE 7 shows an example of undo dependencies through reference data declaration.
FIGURE 8 is a flow chart showing a method performed by an Activation Node for orchestration of activation actions.
FIGURE 9 is a block diagram showing an exemplary embodiment of an action orchestration system according to the disclosed solution.
FIGURE 10 shows a computer program product, comprising a non-transitory computer readable medium and a computer program stored on the computer readable medium.

### DETAILED DESCRIPTION

Instead of specify how and in which order different services should interact with each other the solution described herein introduce a declarative approach for activation orchestration. The focus is put on what to achieve instead of in specifying the details of how to do it.

An action orchestration system will now be described. One type of actions is activation actions. Activation may be performed by a service provisioning platform, sometimes be referred to as a provisioning gateway or provisioning platform. The service provisioning platform may also be referred to as an Activator or Activation Node.

During design time a specification of how a data model for an activation request is mapped to the data models of lower layer resources is built. The style of this specification is declarative focusing on dependencies between the data models and functions for transforming between them.

The intent is to devise a minimal feature set that support the needs of the domain - but not anything more.

In the basic form this specification will not contain any explicit information about e.g. the order in which things should happen. Nor does it contain imperative constructs like branching ("if this then do that") or looping ("do this while not done"). Any potential variants of the flow are achieved in the data transformations themselves.

As an extended form the specification may be appended with declarations of explicit static execution order between two actions in order to make them run sequentially e.g. through defining a condition for the action that is to be run last to require that the result from the first action exists. Further, one action may depend on several others to be ready before being allowed to execute.

In the following description, for purposes of explanation and non-limitation, specific details are set forth, such as particular nodes, functional entities, techniques, protocols, standards, etc. in order to provide an understanding of the described technology. It will be apparent to one skilled in the art that other embodiments may be practiced apart from the specific details disclosed below. In other instances, detailed descriptions of well-known methods, devices, techniques, etc. are omitted so as not to obscure the description with unnecessary detail. Individual function blocks are shown in the figures. Those skilled in the art will appreciate that the functions of those blocks may be implemented using individual hardware circuits, using software programs and data in conjunction with a suitably programmed microprocessor or general purpose computer, using applications specific integrated circuitry (ASIC), and/or using one or more digital signal processors (DSPs). The software program instructions and data may be stored on computer-readable storage medium and when the instructions are executed by a computer or other suitable processor control, the computer or processor performs the functions.

Thus, for example, it will be appreciated by those skilled in the art that block diagrams herein can represent conceptual views of illustrative circuitry or other functional units embodying the principles of the technology. Similarly, it will be appreciated that any flow charts, state transition diagrams, pseudocode, and the like represent various processes which may be substantially represented in a non-transitory computer readable medium and so executed by a computer or processor, whether or not such computer or processor is explicitly shown.

The functions of the various elements including functional blocks, including but not limited to those labeled or described as "computer", "processor" or "controller" may be provided through the use of hardware such as circuit hardware and/or hardware capable of executing software in the form of coded instructions stored on computer readable medium. Thus, such functions and illustrated functional blocks are to be understood as being hardware-implemented and/or computer-implemented, (e.g., machine-implemented).

In terms of hardware implementation, the functional blocks may include or encompass, without limitation, digital signal processor (DSP) hardware, reduced instruction set processor, hardware (e.g., digital or analog) circuitry including but not limited to application specific integrated circuit(s) (ASIC), and (where appropriate) state machines capable of performing such functions.

In terms of computer implementation, a computer is generally understood to comprise one or more processors, or one or more controllers, and the terms computer and processor and controller may be employed interchangeably herein. When provided by a computer, processor, or controller, the functions may be provided by a single dedicated computer, processor, or controller, by a single shared computer, processor, or controller, or by a plurality of individual computers, processors, or controllers, some of which may be shared or distributed. Moreover, use of the term "processor" or "controller" shall also be construed to refer to other hardware capable of performing such functions and/or executing software, such as the example hardware recited above.

The technology may be used in any type of cellular radio communications (e.g., GSM, CDMA, 3G, 4G, etc). For ease of description, the term user equipment (UE) encompasses any kind of radio communications terminal/device, mobile station (MS), PDAs, cell phones, laptops, etc.

Referring now more particularly to the drawings in which like reference numerals indicate like parts throughout the several views.

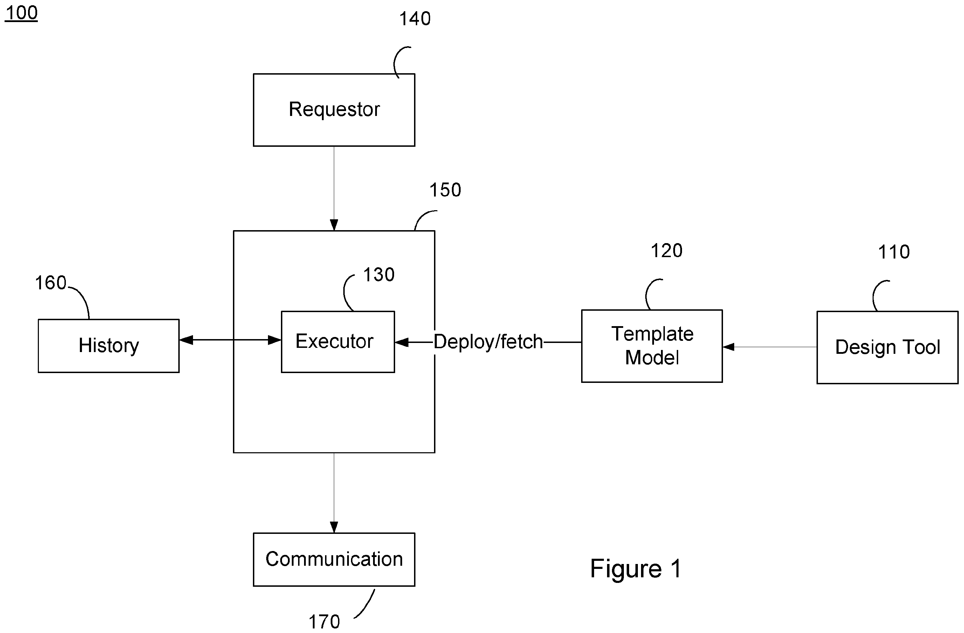

FIGURE 1 shows an overview of a system for action orchestration 100.

Before execution starts the design tool for models 110 generates a template model 120 that is to be the base for execution. Before start of execution the model is deployed or alternatively fetched by the executor 130. As a further alternative the model fetching is triggered by the request from the requestor.

In run-time the requestor 140 formulates and sends a request to the executor, such as an Activation node 150. The executor will match the request with a specific flow to run in a specific model. The matching could be done based on operation type and managed object type but is not limited to that, data such as requestor identity, IP interface etc. could be used at matching. As mentioned above, the matching may involve ad-hoc external fetching of a model if not available locally.

When analyzing the request and the model a base flow is created based on the model. The initial template model is used as a base for this but request data may influence the flow creation, e.g. by predefining the number of repetitions of a specific southbound execution or the execution ordering as long as the data dependencies are respected. If history of previous executions is kept lookup to that data 160 may be done to further build the flow, e.g. by changing order of southbound execution based on likeliness of failure (execute most likely to fail execution earlier in flow if possible based on data dependencies).

The executor will execute the flow. During the execution the created flow will be followed but it may be modified also in this stage, e.g. based on data received as response from communication to southbound executions 170, responses and flow modifications that may require more history lookups for mainly the purpose of repeating southbound executions.

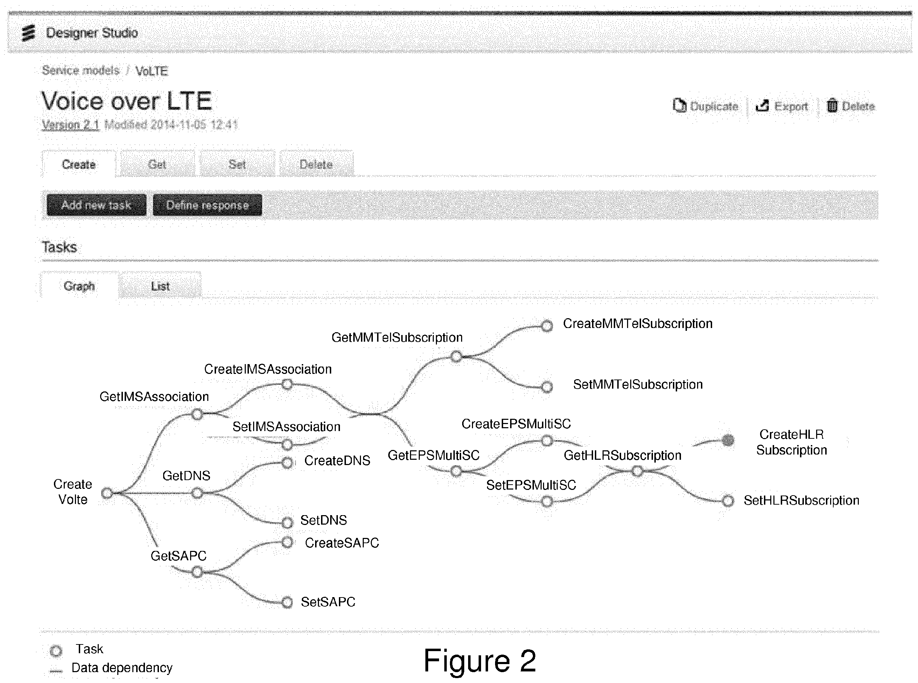

FIGURE 2 shows solution visualization of dependencies between data models. It shows how dependencies between data models effectively can be designed and visualized. The nodes represent information flowing in or out of the logic that is specified. The links represent dependencies between the nodes, indicating that one needs uses information from another node and thus that dependent node could not be completed before the dependency is resolved. Each of the nodes of the graph is possible to zoom into to see and do detailed mapping of each data attribute.

Embodiments described herein may provide a service provisioning platform that provides a single, service-oriented interface for activating services in a communication system. The service provisioning platform may include a service activator that is independent of a service to be activated. In addition, the service provisioning platform may include service processing systems that may simultaneously collect the information that is needed for provisioning/activating a service.

A "service," as used herein, may refer to a data network-related service, a telephone-related service, and/or another type of service. A service may be visible to and directly usable by the customer (sometimes called a Customer Facing Service) or invisible to and/or not directly usable by the customer (sometimes called a Resource Facing Service). A particular service order may cause one or more Customer Facing Services to be activated and/or one or more Resource Facing Services to be used in order to activate the one or more Customer Facing Services. As a simple example, assume that the customer orders a Virtual Private Network (VPN) service. In addition, assume that the VPN service specification requires the use of a particular routing protocol. Thus, the service order for the VPN may cause activation of the VPN service and the required routing protocol service. In this example, the VPN service may be considered a Customer Facing Service and the routing protocol service may be considered a Resource Facing Service.

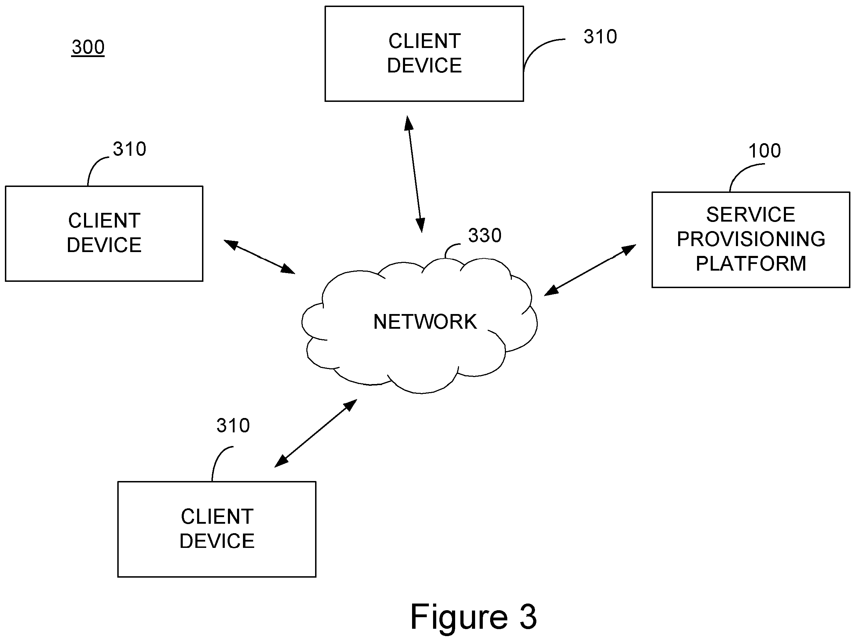

FIGURE 3 is a diagram of an exemplary system 300 in which systems and/or methods described herein may be implemented. System 300 may include client devices 310 as requestor(s) and a service provisioning platform 100 as action orchestration system using a communication interface to connect via a network 330.

Client device 310 may include a device, such as a personal computer, a mainframe computer, a server, a lap top, a personal digital assistant (PDA), a telephone device, such as a wired or wireless telephone, etc. In one embodiment, client device 310 may correspond, for example, to a self-service portal, via which a customer may order a service, a Business Support System (BSS) via which a network operator or service provider administrator for example may order a service for a customer, or another type of device or combination of devices. Client device 310 may connect to network 330 via any technique, such as wired or wireless connections.

Service provisioning platform 100 may include one or more devices that activate services in system 300. For example, service provisioning platform 100 may receive service orders from client devices 310 and cause the ordered or requested services, including any dependent services, to be activated. Service provisioning platform 100 may include one or more centrally located or distributed servers and/or other types of network devices. Service provisioning platform 100 may connect to network 330 via any technique, such as wired or wireless connections.

Network 330 may include one or more networks of any type, including a Public Land Mobile Network (PLMN), a telephone network (e.g., a Public Switched Telephone Network (PSTN) and/or a wireless network), a local area network (LAN), a metropolitan area network (MAN), a wide area network (WAN), an Internet Protocol Multimedia Subsystem (IMS) network, a private network, the Internet, an intranet, and/or another type of network.

Although figure 3 shows exemplary devices and networks of system 300, in other embodiments, system 300 may include fewer, different, differently arranged, or additional devices and/or networks than depicted in Fig. 1. Additionally, or alternatively, one or more devices of system 300 may perform one or more of the tasks described as being performed by one or more other devices of system 300.

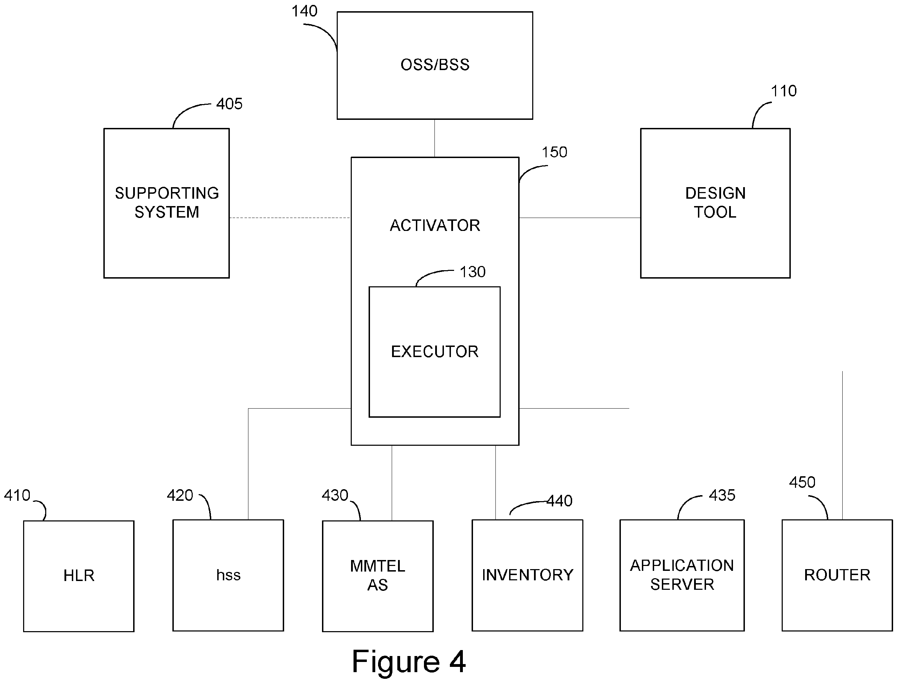

FIGURE 4 shows an Activator 150 in its environment. In one embodiment the Executor 130 of figure 1 is a part of an Activator node. One such Activator node is the Ericsson Multi Activation system (EMA). Sometimes the Executor will be referred to as a Model Data View (MDV) engine. The Activator interfaces with a controlling system 140 issuing the northbound requests. This system is usually an OSS/BSS but is not restricted to that. The northbound interface conveys the requests of the requestor and the data needed to handle those requests. The interfaces could be based on EDIFACT, Web Services, Diameter applications, Remote Procedure Call (RPC), Remote Method Invocation (RMI) etc.

The Executor in the "Activator" executes the models created in the Design Tool 110 as described in later sections, optionally using supporting system 405 to resolve data needed to do the execution or to optimize the executions. The southbound systems expose their data models through different southbound interfaces. These interfaces could be any interface that could expose the model such as LDAP or MML. Conversion from/to theses southbound interfaces from an internal Activator data format could be done in internal Activator converters or Activator-external functions.

The southbound systems are typically subscriber data stores such as an HLR 410 or HSS 420, application servers 430 and 435, infrastructure inventories 440, infrastructure servers, routers 450, border gateways, policy controllers etc.

The Executor will execute in a combination of two different modes, execute mode and revert mode, when executing a northbound request. The execute mode describes the positive execution of the model, i.e. when successfully executing what was requested. The revert mode is the negative execution, or roll back execution, of the model, i.e. when the positive execution has been unsuccessful and the actions that have been done is reverted/undone. They are described in the following sections.

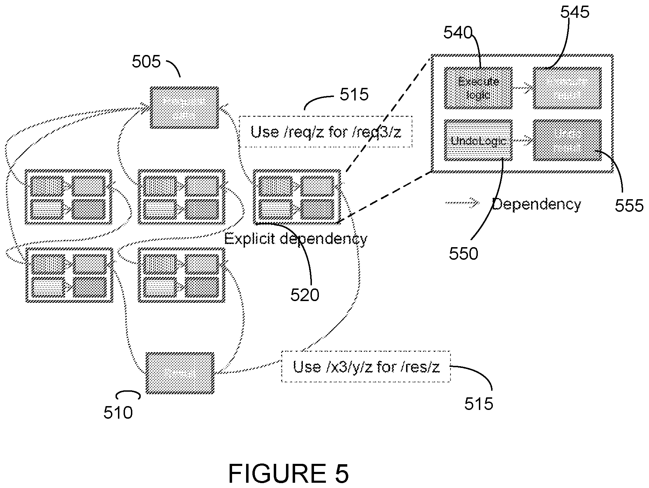

FIGURE 5 shows execution dependencies through data reference declaration. Figure 5 shows how the dependencies are declared as data references (e.g. conditions for an execute logic to be allowed to execute its possible southbound request, copy instructions from the request data or another actions execute result data, copy-transform instructions) and optionally as explicit dependencies if actions are to be forced to run in sequence. These are drawn as arrows in the figure pointing to the dependency.

The topmost text-box "Request data" 505 symbolizes the data carried with the northbound request, i.e. requests received by the Executor via the northbound interface. The down-most text-box "Result" 510 symbolize the data that will be carried with the northbound request response.

The text boxed in dashed lines 515 denotes two examples of copying of data in an environment where the data is transferred in an XML format. The upper text-box indicates that the rightmost action - for its request data path '/req3/z' - will use the northbound requests data with path '/req/z'. The lower text box indicates that the northbound result will set the path '/res/z' in the result to the value at the path '/x3/y/z' in the rightmost actions execute result data.

Notice that there is no ordering between the actions in this declarative style. In the imperative style the connection would rather have been that when one action is fully executed it would lead to the next action being fully executed etc. as a sequence where each actions are connected with and-then. The declarative style instead focuses on how to transform information.

An action 520 consists of two optional parts: the instructions executed in execute mode 540 with its result 545 and the undo instructions 550 executed in revert mode with its result 555. Typically, the execute logic 540 will involve executing a request and interpreting its response. Possibly this request is external and may transform data. In the same way the undo logic 550 will involve roll back of the result of the execute logic in order to revert the transformation and interpret that response. An action may also have a precondition for executing the logic parts. Looking at the top-left action in Figure 5, it has dependencies to the request data. The action below it has a dependency to its result data.

The actions are organized according to their dependencies, i.e. a dependent action is placed after the actions that it depends on when referencing those actions result data. The resulting flow of actions could be stored as a single sequence or as a multidimensional sequence (tree). Cycles should not exist in the resulting graph.

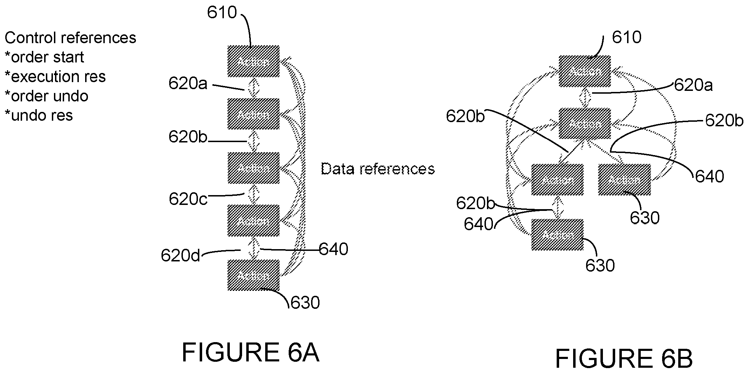

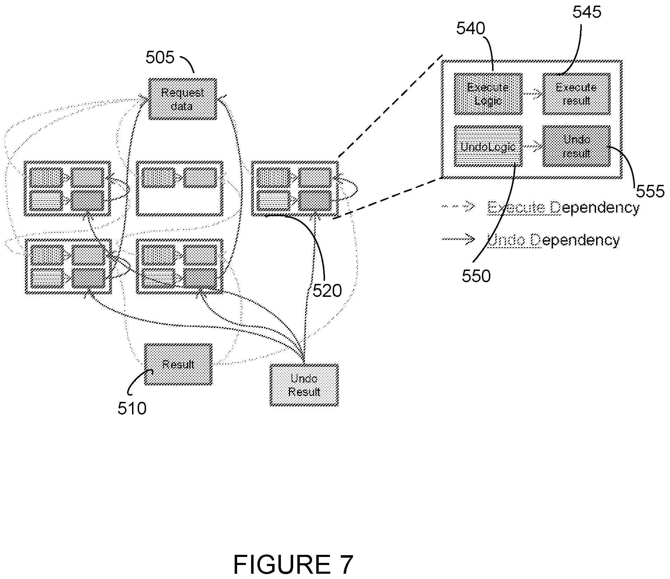

The invention will now be described with reference to FIGURE 6A, 6B and 7. FIGURE 6A and 6B shows action order and referencing possibilities and FIGURE 7 shows undo dependencies through reference data declaration

Figure 6A and 6B show two ways of ordering the tasks, one-dimensional in figure 6A and multi-dimensional in figure 6B, and the relations that the actions have between themselves. When starting execution from the top of the structure 610 an action will provide a reference to its result data to the next action in the flow when starting it. By accumulating all reference data that have been added it will make a reference to the result data that is available to all actions connected below it in the flow branch. The data references and possibilities (i.e. references that are possible from this location) are shown with curved arrows while the control flow/predecessor-successor references are shown with strait arrows (620a-d).

At design time it is also possible to give explicit dependencies i.e. to require that an action is executed before another, something that could be used to require a costly action in terms of resource usage to be executed successfully before the rest of the actions execution are allowed to commence.

At run-time an incoming (northbound) request is analyzed in order to build a runtime representation of the model. Logic to move actions to an earlier position in the action flow (still keeping the dependency restrictions defined at design time) could use (external) history on for example failure frequency as shown in Figure 1. It may also be that the model needs to be extended in run-time, for instance if the source model requires and target model allows duplication of data or actions. It may also be that specific actions or segments of the flow are duplicated for request that targets a variable number of resources.

The logic in the actions are started from the top of the structure continuing sequentially in the branch(es) in order for a succeeding action to get a reference to the future result data of a preceding action.

When actions are evaluated, each action will independently start filling the request data from the initial request and other dependencies, either adding to prebuilt templates of the request or to construct the requests from scratch based on specification and action flow information.

As soon as all needed data is available in order to complete the building of the request and all dependencies (including possible preconditions for execution) are met for an action to execute the request is executed. Execution may be made in parallel with other actions if dependencies are not limiting it. As actions are completed and dependencies for action execution and data availability are met succeeding actions could complete. Eventually all actions have been executed. The decision on when to start execution is taken entirely by the action itself after the action flow has been triggered and the action being initiated.

Since all actions were assigned an order based on dependency etc. just before execution began it was also possible to link all actions to one predecessor, either as a one-dimensional sequence or as a multi-dimensional sequence, and to one or more (if multidimensional sequence) successor. For later undo features it may be important that an actions' result is not sent until all successors have reported their results. Note that this result does not have to be the execution logic result but rather the outcome of the action taking both execute logic and possible undo logic into consideration. The result is aggregated by sending each action's result to its predecessor that aggregates the total result so far.

At multidimensional sequences, a node that has multiple children as a predecessor is synchronizing the result aggregation. This is done until all results are aggregated to the top of the flow. At this point a total result could be composed based on model information, e.g. by constructing an answer. As in FIGURE 5 the result is also composed through data referencing.

The revert-undo will now be explained. The actions to take in an action if it is decided that the execution of the execution logic is to be undone is defined in the same context as the execution logic itself. As example a delete action in the execution logic could be defined together with a create action in the undo logic in the same action context. The solution is not limited to revert an earlier transformation. It may also impact some other data, even unrelated to the context (e.g. failure statistics). Definitions are shown in FIGURE 5 and Figure 7. The undo logic is defined in the same way as the execute logic, creating additional dependencies. This may mean implicitly knowing what the execute action did. In practice, one possibility is that the undo has access to the southbound request and its response. These dependencies must be considered when executing the execute logic since the undo logic must be prepared to run immediately after running the execute logic. If not all dependencies are resolved the undo may not be possible to execute. This fact may limit the dependencies that are possible to the inbound data (triggering request and actions result data) and the actions execute logic request data.

By using the fact that no depending action is executed before its dependency is ready (possibly successful) and that the actions execute logic and undo logic are in the same context, an undo could be limited to execute if the execute logic has been successful and the successor has failed.

Any action's execute logic could fail its execution. The failure needs to be handled by all dependencies that need to know if a failed execution should inhibit, fail or allow this action to continue. If the failing action 610 decides that it's a failure the successor(s) will get informed 620a, b, c through the control reference. In one possible implementation the control reference is a reference to future data (using a programming language Future construct) that was injected into the succeeding actions of the action flow. At this point there is a failure in the executing action flow. The failure information will be propagated in the action control flow(s) until it reaches the end(s) of the flow. At that point the last action(s) 630 need to decide if it is to undo its actions' execution logic if it has executed. If it does nothing or does a successful undo it signals 640 to its predecessor that it is OK, if not that it is NOK. At OK the predecessor will do the same analysis and respond to its predecessor. The result will be aggregated up the action flow up to the initial failing action (or topmost failing action if there are many failures). By running the undo in the reverse dependency order it is guaranteed that clean-up is done in the opposite order of the execute when looking into dependencies.

At the failing action (topmost if multiple failures) it will tell its predecessor that it failed its execution and the status of the undo of all successors (undo success or undo failure). The predecessor needs to inform all its successors except the one that signaled the failure. Each branch will handle the situation as described. When OK is returned from all successors the action need to decide if to undo its own execution and report to its predecessor (see Figure 6, right part). This will continue to the top of the flow.

If instead one action sends NOK back, the action need to decide if the undo of the flow is to continue anyway as described or if it is now to be terminated. The latter case will make the actions return NOK to its predecessor and this will be sent up to the top of the flow. In the case of multiple sequences an action with multiple successors will synchronize the returning of the result from its child branches.

The undo will differ in characteristics between the one and multidimensional action sequences in that a one-dimensional flow could stop undo on first undo failure but the undo will be done in sequence while the multi-dimensional flow could be done in parallel but do not stop immediately on first undo failure.

In the top of the flow the initiator needs to compose an answer based on the response, e.g. failed with successful undo logic execution.

As with the execute logic, the undo logic need seize any reference data. A problem being that all data that is needed for the undo must be known to be available. The data known to be available to an actions' undo logic is for example the actions execution result, the execution request data and the dependency data for execute. The actions dependency data may be what is written, the dependency data for execute, and the dependency data for undo. What is added is that the undo itself could be dependent to action that the execute does not depend on, i.e. the injected get operation. This is handled by having only one set of dependencies in an action, a set that is the merge between execute and undo dependencies. For execute to be allowed to execute all dependencies in that set needs to be resolved. In that case, if execute was successful all dependencies are available for undo if that should be needed.

Undo is only applicable if the actions execution is executed since its purpose is to revert any transformation. If other data than this is needed the execution must depend on that actions result, i.e. the undo execution always depend on the actions execution and by having the execution depend on another task it will always have been executed at undo. This dependency chain is handled at design time and could be extended in runtime.

The solution may also handle situations were an action has no need of an undo logic, e.g. at GET action, or when an undo logic is needed to repair one or several other actions earlier in the dependency chain.

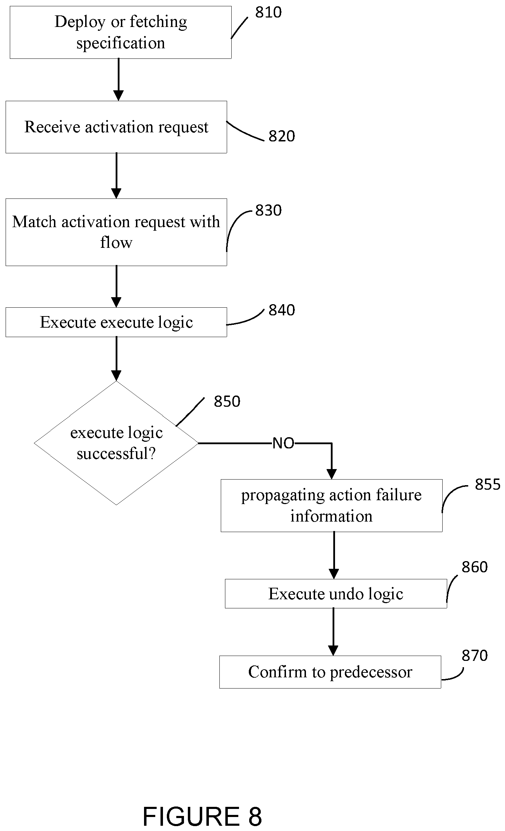

FIGURE 8 is a flow chart showing a method performed by an Activation Node for orchestration of activation actions. The activation actions each comprises an execute logic and the method comprises deploying or fetching a specification in step 810. The specification is mapping dependencies between a data model for an activation request to a data model of lower layer resources, to be used for orchestrating execution of the activation actions. Examples of lower layer resources are data kept in e.g. an HLR about a user or data in other Network Element. The Activation Node is receiving an activation request in step 820. In step 830 the activation request is matched with a specific flow of activation actions to be executed in in accordance with the specification. The method also comprises, in step 840, executing the execute logic of the flow of activation actions ordered based on the dependencies between the data models.

An activation action further comprises an undo logic which is executed when it has been determined in step 850 that the execution of the execute logic of the flow of activation actions has been unsuccessful. Actions that have been executed may then be reverted or undone in step 860.

Thus, the method involves deciding that an action has failed in step 850. Action failure information is propagated in the order of the flow of activation actions until it has reached all actions of the flow in step 855. Triggered by the propagated action failure information, for each action of the flow of activation actions, starting from the last action(s) of the flow of activation actions and in opposite order of the execution start order of the execute logic, it is decided if the action is to undo its execute logic and if so executing the undo logic in step 860 and confirm to its predecessor in step 870 thereby enabling the predecessor to execute its undo logic.

The specification includes declarations of explicit static execution order between activation actions in order to make them run sequentially. An activation action depends on several other activation actions to be ready before being allowed to execute. Further, the matching is based on any of operation type, managed object type, requestor identity or network interface the request was received on. To support different flows based upon the origin of the request, examples include offering different capabilities to different Service Providers, Virtual Operators, or different types of requestors (e.g. to support different levels of functionality or access right to administrators vs "normal" users.) The order of activation actions are further based on request data and/or the order of activation actions are based on historical data of previous executions.

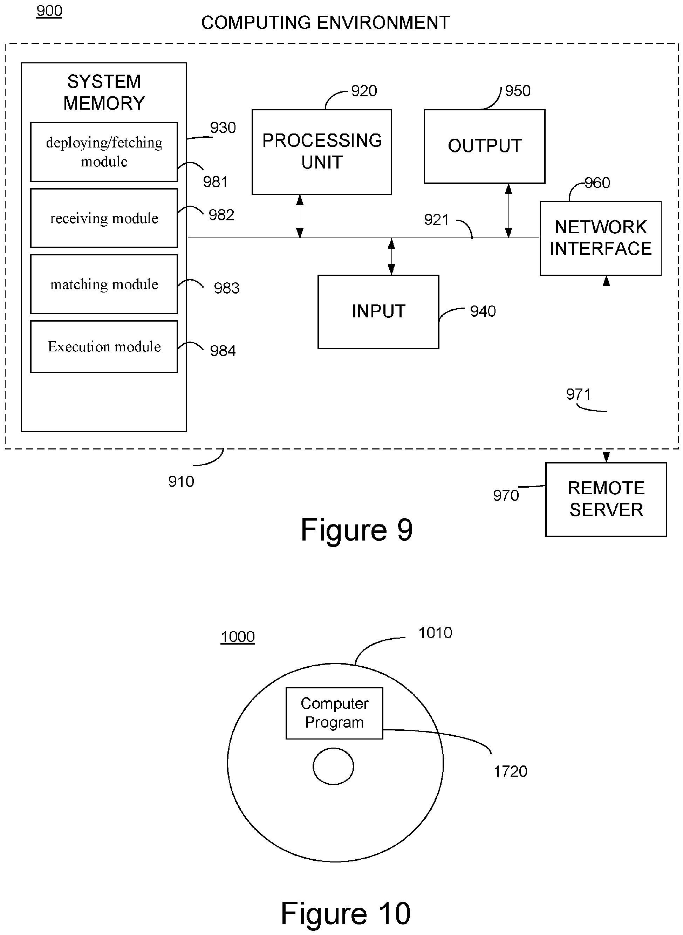

FIGURE 9 is a block diagram showing an exemplary embodiment of a system for action orchestration according to the disclosed solution in the form of computing system environment 900.

Although as made clear above, the computing system environment 900 is only one example of a suitable computing environment and is not intended to suggest any limitation as to the scope of use or functionality of the claimed subject matter. Further, the computing environment 900 is not intended to suggest any dependency or requirement relating to the claimed subject matter and any one or combination of components illustrated in the example operating environment 900.

An example of a device for implementing the previously described system includes a general purpose computing device in the form of a computer 910. Components of computer 910 can include, but are not limited to, a processing unit 920, a system memory 930, and a system bus 921 that couples various system components including the system memory to the processing unit 920. The system bus 921 can be any of several types of bus structures including a memory bus or memory controller, a peripheral bus, and a local bus using any of a variety of bus architectures.

Computer 910 can include a variety of transitory and non-transitory computer readable media. Computer readable media can be any available media that can be accessed by computer 910. By way of example, and not limitation, computer readable media can comprise computer storage media and communication media. Computer storage media includes volatile and nonvolatile as well as removable and non-removable media implemented in any method or technology for storage of information such as computer readable instructions, data structures, program modules or other data. Computer storage media includes, but is not limited to, RAM, ROM, EEPROM, flash memory or other memory technology, CDROM, digital versatile disks (DVD) or other optical disk storage, magnetic cassettes, magnetic tape, magnetic disk storage or other magnetic storage devices, or any other medium which can be used to store the desired information and which can be accessed by computer 910. Communication media can embody computer readable instructions, data structures, program modules or other data in a modulated data signal such as a carrier wave or other transport mechanism and can include any suitable information delivery media. Figure 10 shows computer readable media in the form of a computer program product 1010 including a computer program 1020.

The system memory 930 can include computer storage media in the form of volatile and/or nonvolatile memory such as read only memory (ROM) and/or random access memory (RAM). A basic input/output system (BIOS), containing the basic routines that help to transfer information between elements within computer 910, such as during start-up, can be stored in memory 930. Memory 930 can also contain data and/or program modules that are immediately accessible to and/or presently being operated on by processing unit 920. By way of non-limiting example, memory 930 can also include an operating system, application programs, other program modules, and program data.

The system memory 930 may include a software module loaded in the memory and processable by the processing unit, or other circuitry which cause the system for action orchestration to perform the steps described herein.

In particular, the system memory 930 may include a software module loaded in the memory and processable by the processing unit or other circuitry, which cause the Activation Node for orchestration of activation actions, the activation actions each comprising an execute logic, to deploy or fetch a specification. The specification is mapping dependencies between a data model for an activation request to a data model of lower layer resources, to be used for orchestrating execution of the activation actions.

The memory does also contain instructions which cause the Activation Node to receive an activation request and to match the activation request with a specific flow of activation actions to be executed in in accordance with the specification.

Further, the memory contains instructions which cause the Activation Node to execute the execute logic of the flow of activation actions (840) ordered based on the dependencies between the data models.

More particularly, the Activation Node may include the following software modules for orchestration of activation actions:
a deploying/fetching module 981 for deploying or fetching a specification, the specification mapping dependencies between a data model for an activation request to a data model of lower layer resources, to be used for orchestrating execution of the activation actions;
a receiving module 982 for receiving an activation request;
a matching module for 983 for matching the activation request with a specific flow of activation actions to be executed in in accordance with the specification; and
an execution module 984 for executing the execute logic of the flow of activation actions ordered based on the dependencies between the data models.

The computer 910 can also include other removable/non-removable and volatile/nonvolatile computer storage media. For example, computer 910 can include a hard disk drive that reads from or writes to non-removable, nonvolatile magnetic media, a magnetic disk drive that reads from or writes to a removable, nonvolatile magnetic disk, and/or an optical disk drive that reads from or writes to a removable, nonvolatile optical disk, such as a CD-ROM or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM and the like. A hard disk drive can be connected to the system bus 921 through a non-removable memory interface such as an interface, and a magnetic disk drive or optical disk drive can be connected to the system bus 921 by a removable memory interface, such as an interface.

A user can enter commands and information into the computer 910 through input devices such as a keyboard or a pointing device such as a mouse, trackball, touch pad, and/or other pointing device. Other input devices can include a microphone, joystick, game pad, satellite dish, scanner, or similar devices. These and/or other input devices can be connected to the processing unit 920 through user input 940 and associated interface(s) that are coupled to the system bus 921, but can be connected by other interface and bus structures, such as a parallel port, game port or a universal serial bus (USB).

A graphics subsystem can also be connected to the system bus 921. In addition, a monitor or other type of display device can be connected to the system bus 921 through an interface, such as output interface 950, which can in turn communicate with video memory. In addition to a monitor, computers can also include other peripheral output devices, such as speakers and/or printing devices, which can also be connected through output interface 950.

The computer 910 can operate in a networked or distributed environment using logical connections to one or more other remote computers, such as remote server 970, which can in turn have media capabilities different from device 910. The remote server 970 can be a personal computer, a server, a router, a network PC, a peer device or other common network node, and/or any other remote media consumption or transmission device, and can include any or all of the elements described above relative to the computer 910. The logical connections depicted in FIG. 9 include a network 971, such as a local area network (LAN) or a wide area network (WAN), but can also include other networks/buses.

When used in a LAN networking environment, the computer 910 is connected to the LAN 971 through a network interface or adapter. When used in a WAN networking environment, the computer 910 can include a communications component, such as a modem, or other means for establishing communications over a WAN, such as the Internet. A communications component, such as a modem, which can be internal or external, can be connected to the system bus 921 through the user input interface at input 940 and/or other appropriate mechanism.

In a networked environment, program modules depicted relative to the computer 910, or portions thereof, can be stored in a remote memory storage device. It should be noted that the network connections shown and described are exemplary and other means of establishing a communications link between the computers can be used.

Additionally, it should be noted that as used in this application, terms such as "component," "display," "interface," and other similar terms are intended to refer to a computing device, either hardware, a combination of hardware and software, software, or software in execution as applied to a computing device. For example, a component may be, but is not limited to being, a process running on a processor, a processor, an object, an executable, a thread of execution, a program and a computing device. As an example, both an application running on a computing device and the computing device can be components. One or more components can reside within a process and/or thread of execution and a component can be localized on one computing device and/or distributed between two or more computing devices, and/or communicatively connected modules. Further, it should be noted that as used in this application, terms such as "system user," "user," and similar terms are intended to refer to the person operating the computing device referenced above.

When an element is referred to as being "connected", "coupled", "responsive", or variants thereof to another element, it can be directly connected, coupled, or responsive to the other element or intervening elements may be present. In contrast, when an element is referred to as being "directly connected", "directly coupled", "directly responsive", or variants thereof to another element, there are no intervening elements present. Like numbers refer to like elements throughout. Furthermore, "coupled", "connected", "responsive", or variants thereof as used herein may include wirelessly coupled, connected, or responsive. As used herein, the singular forms "a", "an" and "the" are intended to include the plural forms as well, unless the context clearly indicates otherwise. Well-known functions or constructions may not be described in detail for brevity and/or clarity. The term "and/or" includes any and all combinations of one or more of the associated listed items.

As used herein, the terms "comprise", "comprising", "comprises", "include", "including", "includes", "have", "has", "having", or variants thereof are open-ended, and include one or more stated features, integers, elements, steps, components or functions but does not preclude the presence or addition of one or more other features, integers, elements, steps, components, functions or groups thereof. Furthermore, as used herein, the common abbreviation "e.g.", which derives from the Latin phrase "exempli gratia," may be used to introduce or specify a general example or examples of a previously mentioned item, and is not intended to be limiting of such item. The common abbreviation "i.e.", which derives from the Latin phrase "id est," may be used to specify a particular item from a more general recitation.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated.

Finally, other blocks may be added/inserted between the blocks that are illustrated. Moreover, although some of the diagrams include arrows on communication paths to show a primary direction of communication, it is to be understood that communication may occur in the opposite direction to the depicted arrows.

Many different embodiments have been disclosed herein, in connection with the above description and the drawings. It will be understood that it would be unduly repetitious and obfuscating to literally describe and illustrate every combination and subcombination of these embodiments. Accordingly, the present specification, including the drawings, shall be construed to constitute a complete written description of various exemplary combinations and subcombinations of embodiments and of the manner and process of making and using them, and shall support claims to any such combination or subcombination.

Many variations and modifications can be made to the embodiments without departing from the scope of the claims.

The foregoing disclosure has described a method that allows the specification of Activation Orchestration logic in a declarative way along with an apparatus that executes such a specification. These declarations define how data of different sources affect each other in terms of conditions for action (make the data of a data source available by fetching data from it), condition for allowing a copy transformation from a source to an action to be used as input when fetching data from another source, copy transformations, forced order of execution etc. In addition, it declares its' revert actions in the same context as the Activation Orchestration logic providing automatic clean-up at failures.

The execution of the specification will conform to the declarations done in runtime, optionally continuously optimizing the execution while still following the intentions made in the declaration. Execution of an individual action is not done until all its mandatory prerequisites (conditions upon other source data, e.g. individual data values or presence of individual data such as "flag" exist or "flag=true" in addition to action is ready or successful) and other mandatory dependencies to different source data) are fulfilled, effectively defining the parallelism of the logic execution.

An advantage compared to prior solutions in the domain is that the latter are locked into an imperative way of specifying the logic and manually defining its level of parallelism in different situations.

By declaring what and why one can let the execution engine compute the most efficient way of execution. Efficiency primarily means a short total time for execution, possibly the usage of computation resources used for the processing can also be optimized e.g. by having auto-tunable timeouts and thread usage. Sub-optimization at human interference in deciding usage for low level resources such as threads is removed.

By not involving a human in the exact low-level specification a large source of errors is removed. It also removes the risk of making assumptions in design time that is not correct in run-time, e.g. assuming that a particular task takes longer to execute than another can lead to faulty decisions about the optimal order to execute them in.

Working on the abstraction level of what instead of how makes it possible to build useful graphical visualizations of dependency flows as well as graphical support for the editing of dependency flows. The abstraction also relives the user from the complexity of manually defining concurrent execution and synchronization points.
- AS: Application Server
- BPM: Business Process Modelling
- BPMN: Business Process Modeling Notation
- BSS: Business Support System
- EDIFACT: Electronic Data Interchange for Administration, Commerce and Transport
- EMA: Ericsson Multi Activation
- HLR: Home Location Register
- HSS: Home Subscriber Server
- LDAP: Lightweight Directory Access Protocol
- MDV: Model Data View
- MML: Man-Machine Language
- MMTEL: Multimedia Telephony
- OSS: Operation Support System
- RMI: Remote Method Invocation
- RPC: Remote Procedure Call

## Claims

1. A method performed by a service provisioning platform (150) for activating services in a communication system, wherein the service provisioning platform orchestrates activation actions each comprising an execute logic (540), the method comprising the steps:
- deploying or fetching a specification (810) that is organizing the activation of the actions according to their dependencies, to be used for orchestrating execution of the activation of the actions;
wherein the specification is built during a design time and the specification includes declarations of explicit static execution order between activation of the actions in order to make them run sequentially; wherein the activation of a service depends on several other activation of the actions to be ready before being allowed to execute;
wherein the order of activation of the actions is further based on historical data of previous executions;
- receiving an activation request (820);
- matching the activation request with a specific flow of activation of the actions to be executed in in-accordance with the specification (830); and
- executing the execute logic of the matched flow of activation of the actions (840) ordered based on their data dependencies;
wherein the activation of the action further comprises an undo logic (550); and the method further comprising the steps:
- executing the undo logic, when the execution of the execute logic of the flow of the activation of the actions has failed (850) and deciding that an action has failed;
- propagating action failure information in the order of the flow of the activation of the actions until it has reached all actions of the flow (620a-d, 855);
- triggered by the propagated action failure information, for each action of the flow of activation of the actions, starting from the last actions of the flow of the activation of the actions and in opposite order of the execution start order of the execute logic, deciding if it is to undo its execute logic and if so executing the undo logic (630, 860); and
- confirming to its predecessor (640, 870) thereby enabling the predecessor to execute its undo logic.

2. The method according to claim 1 wherein the order of the activation of the actions is further based on request data.

3. A service provisioning platform (150) for activating services in a communication system, wherein the service provisioning platform orchestrates activation actions each comprising an execute logic (540), the service provisioning platform adapted to:
- deploy or fetch a specification (810)that is organizing the activation of the actions according to their dependencies, to be used for orchestrating execution of the activation of the actions; wherein the specification is built during a design time and the specification includes declarations of explicit static execution order between activation of the actions in order to make them run sequentially; wherein the activation of the action depends on several other activation of the actions to be ready before being allowed to execute; wherein the order of activation of the actions is further based on historical data of previous executions;
- receive an activation request (820);
- match the activation request with a specific flow of activation of the actions to be executed in in accordance with the specification (830); and
- execute the execute logic of the matched flow of activation of the actions (840) ordered based on their data dependencies;
wherein the activation of the service further comprises an undo logic (550) and the service provisioning platform is further adapted to:
- execute the undo logic, when the execution of the execute logic of the flow of the activation of the actions has failed (850) and decide that an action has failed;
- propagate action failure information in the order of the flow of the activation of the actions until it has reached all actions of the flow (620a-d, 855);
- triggered by the propagated action failure information, for each action of the flow of activation of the actions, starting from the last actions of the flow of the activation of the actions and in opposite order of the execution start order of the execute logic, decide if it is to undo its execute logic and if so executing the undo logic (630, 860); and
- confirm to its predecessor (640, 870) thereby enabling the predecessor to execute its undo logic.

4. The service provisioning platform according to claim 3 wherein the matching is based on any of operation type, managed object type, requestor identity or network interface the request was received on.

5. The service provisioning platform according to anyone of claims 3-4 wherein the order of the activation of the actions is further based on request data.

6. A computer program containing comprising computer readable code means, which when run in a computer being configured as a service provisioning platform for activating services in a communication system, wherein the service provisioning platform orchestrates activation actions, the computer readable code means causes the computer to perform the following steps:
- deploying or fetching a specification (810)that is organizing the activation of the actions according to their dependencies, to be used for orchestrating execution of the activation of the actions; wherein the specification is built during a design time and the specification includes declarations of explicit static execution order between the activation of the actions in order to make them run sequentially; wherein the activation of a action depends on several other activation of the actions to be ready before being allowed to execute; wherein the order of activation of the actions is further based on historical data of previous executions;
- receiving an activation request (820);
- matching the activation request with a specific flow of activation of the actions to be executed in in accordance with the specification (830); and
- executing the execute logic of the matched flow of activation of the actions (840) ordered based on their data dependencies;
wherein the activation of the action further comprises an undo logic (550) and the computer readable code means causes the computer to perform the following steps:
- executing the undo logic, when the execution of the execute logic of the flow of the activation of the actions has failed (850) and decide that an action has failed;
- propagating action failure information in the order of the flow of the activation of the actions until it has reached all actions of the flow (620a-d, 855);
- triggered by the propagated action failure information, for each action of the flow of activation of the actions, starting from the last actions of the flow of the activation of the actions and in opposite order of the execution start order of the execute logic, deciding if it is to undo its execute logic and if so executing the undo logic (630, 860); and
- confirming to its predecessor (640, 870) thereby enabling the predecessor to execute its undo logic.

7. A computer program product comprising a computer readable medium and a computer program according to claim 6 stored on the computer readable medium.

## Patentansprüche

1. Verfahren, das von einer Dienstbereitstellungsplattform (150) durchgeführt wird, zum Aktivieren von Diensten in einem Kommunikationssystem, wobei die Dienstbereitstellungsplattform Aktivierungsaktionen orchestriert, die jeweils eine Ausführungslogik (540) umfassen, wobei das Verfahren die Schritte umfasst:
- Verteilen oder Abrufen einer Spezifikation (810), die die Aktivierung der Aktionen gemäß ihren Abhängigkeiten organisiert und die zum Orchestrieren der Ausführung der Aktivierung der Aktionen verwendet werden soll;
wobei die Spezifikation während einer Gestaltungszeit erstellt wird und die Spezifikation Deklarationen einer expliziten statischen Ausführungsreihenfolge zwischen der Aktivierung der Aktionen einschließt, um sie sequenziell auszuführen; wobei die Aktivierung eines Dienstes davon abhängt, dass mehrere andere Aktivierungen der Aktionen bereit sind, bevor sie ausgeführt werden dürfen;
wobei die Reihenfolge der Aktivierung der Aktionen ferner auf Verlaufsdaten vorheriger Ausführungen basiert;
- Empfangen einer Aktivierungsanforderung (820);
- Abstimmen der Aktivierungsanforderung mit einem spezifischen Fluss der Aktivierung der Aktionen, die gemäß der Spezifikation ausgeführt werden sollen, (830) und
- Ausführen der Ausführungslogik des abgestimmten Flusses der Aktivierung der Aktionen (840) geordnet basierend auf ihren Datenabhängigkeiten;
wobei die Aktivierung der Aktion ferner eine Rückgängigmachenlogik (550) umfasst und das Verfahren ferner die Schritte umfasst:
- Ausführen der Rückgängigmachenlogik, wenn die Ausführung der Ausführungslogik des Flusses der Aktivierung der Aktionen fehlgeschlagen ist, (850) und Entscheiden, dass eine Aktion fehlgeschlagen ist;
- Verbreiten von Aktionsfehlerinformationen in der Reihenfolge des Flusses der Aktivierung der Aktionen, bis es alle Aktionen des Flusses erreicht hat, (620a bis d, 855)
- ausgelöst durch die verbreiteten Aktionsfehlerinformationen, für jede Aktion des Flusses der Aktivierung der Aktionen, ausgehend von den letzten Aktionen des Flusses der Aktivierung der Aktionen und in entgegengesetzter Reihenfolge zur Ausführungsstartreihenfolge der Ausführungslogik, Entscheiden, ob es die Ausführungslogik rückgängig machen soll, und falls ja, Ausführen der Rückgängigmachenlogik (630, 860) und
- Erteilen einer Bestätigung an seinen Vorgänger (640, 870), wodurch es dem Vorgänger ermöglicht wird, seine Rückgängigmachenlogik auszuführen.

2. Verfahren nach Anspruch 1, wobei die Reihenfolge der Aktivierung der Aktionen ferner auf Anforderungsdaten basiert.

3. Dienstbereitstellungsplattform (150) zum Aktivieren von Diensten in einem Kommunikationssystem, wobei die Dienstbereitstellungsplattform Aktivierungsaktionen orchestriert, die jeweils eine Ausführungslogik (540) umfassen, wobei die Dienstbereitstellungsplattform angepasst ist zum:
- Verteilen oder Abrufen einer Spezifikation (810), die die Aktivierung der Aktionen gemäß ihren Abhängigkeiten organisiert und die zum Orchestrieren der Ausführung der Aktivierung der Aktionen verwendet werden soll; wobei die Spezifikation während einer Gestaltungszeit erstellt wird und die Spezifikation Deklarationen einer expliziten statischen Ausführungsreihenfolge zwischen der Aktivierung der Aktionen einschließt, um sie sequenziell auszuführen; wobei die Aktivierung der Aktion davon abhängt, dass mehrere andere Aktivierungen der Aktionen bereit sind, bevor sie ausgeführt werden dürfen; wobei die Reihenfolge der Aktivierung der Aktionen ferner auf Verlaufsdaten vorheriger Ausführungen basiert;
- Empfangen einer Aktivierungsanforderung (820);
- Abstimmen der Aktivierungsanforderung mit einem spezifischen Fluss der Aktivierung der Aktionen, die gemäß der Spezifikation ausgeführt werden sollen, (830) und
- Ausführen der Ausführungslogik des abgestimmten Flusses der Aktivierung der Aktionen (840) geordnet basierend auf ihren Datenabhängigkeiten;
wobei die Aktivierung des Dienstes ferner eine Rückgängigmachenlogik (550) umfasst und die Dienstbereitstellungsplattform ferner angepasst ist zum:
- Ausführen der Rückgängigmachenlogik, wenn die Ausführung der Ausführungslogik des Flusses der Aktivierung der Aktionen fehlgeschlagen ist, (850) und Entscheiden, dass eine Aktion fehlgeschlagen ist;
- Verbreiten von Aktionsfehlerinformationen in der Reihenfolge des Flusses der Aktivierung der Aktionen, bis sie alle Aktionen des Flusses erreicht hat, (620a bis d, 855)
- ausgelöst durch die verbreiteten Aktionsfehlerinformationen, für jede Aktion des Flusses der Aktivierung der Aktionen, ausgehend von den letzten Aktionen des Flusses der Aktivierung der Aktionen und in entgegengesetzter Reihenfolge zu der Ausführungsstartreihenfolge der Ausführungslogik, Entscheiden, ob sie ihre Ausführungslogik rückgängig machen soll, und falls ja, Ausführen der Rückgängigmachenlogik (630, 860); und
- Erteilen einer Bestätigung an ihren Vorgänger (640, 870), wodurch es dem Vorgänger ermöglicht wird, seine Rückgängigmachenlogik auszuführen.

4. Dienstbereitstellungsplattform nach Anspruch 3, wobei das Abstimmen auf einem beliebigen von einem Operationstyp, einem verwalteten Objekttyp, einer Anfordereridentität oder einer Netzwerkschnittstelle, auf der die Anforderung empfangen wurde, basiert.

5. Dienstbereitstellungsplattform nach einem der Ansprüche 3 bis 4, wobei die Reihenfolge der Aktivierung der Aktionen ferner auf Anforderungsdaten basiert.

6. Computerprogramm, das computerlesbare Codemittel umfasst, die, wenn sie in einem Computer ausgeführt werden, als Dienstbereitstellungsplattform zum Aktivieren von Diensten in einem Kommunikationssystem konfiguriert sind, wobei die Dienstbereitstellungsplattform Aktivierungsaktionen orchestriert, wobei die computerlesbaren Codemittel den Computer veranlassen, die folgenden Schritte durchzuführen:
- Verteilen oder Abrufen einer Spezifikation (810), die die Aktivierung der Aktionen gemäß ihren Abhängigkeiten organisiert und die zum Orchestrieren der Ausführung der Aktivierung der Aktionen verwendet werden soll; wobei die Spezifikation während einer Gestaltungszeit erstellt wird und die Spezifikation Deklarationen einer expliziten statischen Ausführungsreihenfolge zwischen der Aktivierung der Aktionen einschließt, um sie sequenziell auszuführen; wobei die Aktivierung einer Aktion davon abhängt, dass mehrere andere Aktivierungen der Aktionen bereit sind, bevor sie ausgeführt werden dürfen; wobei die Reihenfolge der Aktivierung der Aktionen ferner auf Verlaufsdaten vorheriger Ausführungen basiert;
- Empfangen einer Aktivierungsanforderung (820);
- Abstimmen der Aktivierungsanforderung mit einem spezifischen Fluss der Aktivierung der Aktionen, die gemäß der Spezifikation ausgeführt werden sollen, (830) und
- Ausführen der Ausführungslogik des abgestimmten Flusses der Aktivierung der Aktionen (840) geordnet basierend auf ihren Datenabhängigkeiten;
wobei die Aktivierung der Aktion ferner eine Rückgängigmachenlogik (550) umfasst und die computerlesbaren Codemittel den Computer veranlassen, die folgenden Schritte durchzuführen:
- Ausführen der Rückgängigmachenlogik, wenn die Ausführung der Ausführungslogik des Flusses der Aktivierung der Aktionen fehlgeschlagen ist, (850) und Entscheiden, dass eine Aktion fehlgeschlagen ist;
- Verbreiten von Aktionsfehlerinformationen in der Reihenfolge des Flusses der Aktivierung der Aktionen, bis es alle Aktionen des Flusses erreicht hat, (620a bis d, 855)
- ausgelöst durch die verbreiteten Aktionsfehlerinformationen, für jede Aktion des Flusses der Aktivierung der Aktionen, ausgehend von den letzten Aktionen des Flusses der Aktivierung der Aktionen und in entgegengesetzter Reihenfolge zur Ausführungsstartreihenfolge der Ausführungslogik, Entscheiden, ob es die Ausführungslogik rückgängig machen soll, und falls ja, Ausführen der Rückgängigmachenlogik (630, 860) und
- Erteilen einer Bestätigung an seinen Vorgänger (640, 870), wodurch es dem Vorgänger ermöglicht wird, seine Rückgängigmachenlogik auszuführen.

7. Computerprogrammprodukt, umfassend ein computerlesbares Medium und ein Computerprogramm nach Anspruch 6, das auf dem computerlesbaren Medium gespeichert ist.

## Revendications

1. Procédé mis en œuvre par une plate-forme de fourniture de service (150) pour activer des services dans un système de communication, dans lequel la plate-forme de fourniture de service orchestre des actions d'activation comprenant chacune une logique d'exécution (540), le procédé comprenant les étapes :
- déploiement ou extraction d'une spécification (810) qui organise l'activation des actions selon leurs dépendances, à utiliser pour orchestrer l'exécution de l'activation des actions ; dans lequel la spécification est construite pendant un moment de conception et la spécification inclut des déclarations d'ordre d'exécution statique explicite entre une activation des actions afin de faire en sorte qu'elles s'exécutent séquentiellement ; dans lequel l'activation d'un service dépend de plusieurs activations des actions pour être prête avant d'être autorisée à s'exécuter ;
dans lequel l'ordre d'activation des actions est en outre basé sur des données historiques d'exécutions précédentes ;
- réception d'une demande d'activation (820) ;
- mise en correspondance de la demande d'activation avec un flux spécifique d'activation des actions à exécuter conformément à la spécification (830) ; et
- exécution de la logique d'exécution du flux mis en correspondance d'activation des actions (840) ordonnées sur la base de leurs dépendances de données ;
dans lequel l'activation de l'action comprend en outre une logique d'annulation (550) ; et le procédé comprenant en outre les étapes :
- exécution de la logique d'annulation, lorsque l'exécution de la logique d'exécution du flux de l'activation des actions a échoué (850) et décision qu'une action a échoué ;
- propagation d'informations d'échec d'action dans l'ordre du flux de l'activation des actions jusqu'à ce qu'elles aient atteint toutes les actions du flux (620a-d, 855) ;
- déclenchée par les informations d'échec d'action propagées, pour chaque action du flux d'activation des actions, en partant des dernières actions du flux de l'activation des actions et dans l'ordre opposé de l'ordre de démarrage d'exécution de la logique d'exécution, décision pour savoir s'il faut annuler sa logique d'exécution et le cas échéant exécution de la logique d'annulation (630, 860) ; et
- confirmation à son prédécesseur (640, 870) ce qui permet au prédécesseur d'exécuter sa logique d'annulation.

2. Procédé selon la revendication 1, dans lequel l'ordre de l'activation des actions est en outre basé sur des données de demande.

3. Plate-forme de fourniture de service (150) pour activer des services dans un système de communication, dans laquelle la plate-forme de fourniture de service orchestre des actions d'activation comprenant chacune une logique d'exécution (540), la plate-forme de fourniture de service conçue pour :
- déployer ou extraire une spécification (810) qui organise l'activation des actions selon leurs dépendances, à utiliser pour orchestrer l'exécution de l'activation des actions ; dans laquelle la spécification est construite pendant un moment de conception et la spécification inclut des déclarations d'ordre d'exécution statique explicite entre une activation des actions afin de faire en sorte qu'elles s'exécutent séquentiellement ; dans laquelle l'activation de l'action dépend de plusieurs autres activations des actions pour être prête avant d'être autorisée à s'exécuter ; dans laquelle l'ordre d'activation des actions est en outre basé sur des données historiques d'exécutions précédentes ;
- recevoir une demande d'activation (820) ;
- mettre en correspondance la demande d'activation avec un flux spécifique d'activation des actions à exécuter conformément à la spécification (830) ; et
- exécuter la logique d'exécution du flux mis en correspondance d'activation des actions (840) ordonnées sur la base de leurs dépendances de données ;
dans laquelle l'activation du service comprend en outre une logique d'annulation (550) et la plate-forme de fourniture de service est conçue en outre pour :
- exécuter la logique d'annulation, lorsque l'exécution de la logique d'exécution du flux de l'activation des actions a échoué (850) et décider qu'une action a échoué ;
- propager des informations d'échec d'action dans l'ordre du flux de l'activation des actions jusqu'à ce qu'elles aient atteint toutes les actions du flux (620a-d, 855) ;
- déclenché par les informations d'échec d'action propagées, pour chaque action du flux d'activation des actions, en partant des dernières actions du flux de l'activation des actions et dans l'ordre opposé de l'ordre de démarrage d'exécution de la logique d'exécution, décider s'il faut annuler sa logique d'exécution et le cas échéant exécution de la logique d'annulation (630, 860) ; et
- confirmer à son prédécesseur (640, 870) ce qui permet au prédécesseur d'exécuter sa logique d'annulation.

4. Plate-forme de fourniture de service selon la revendication 3 dans laquelle la mise en correspondance est basée sur l'un quelconque parmi type d'opération, type d'objet géré, identité de demandeur ou interface réseau sur laquelle la demande a été reçue.

5. Plate-forme de fourniture de service selon l'une quelconque des revendications 3 à 4 dans laquelle l'ordre de l'activation des actions est en outre basé sur des données de demande.

6. Programme informatique comprenant un moyen de code lisible par un ordinateur, qui lorsqu'il est exécuté dans un ordinateur étant configuré en tant que plate-forme de fourniture de service pour activer des services dans un système de communication, dans lequel la plate-forme de fourniture de service orchestre des actions d'activation, le moyen de code lisible par un ordinateur amène l'ordinateur à mettre en œuvre les étapes suivantes :
- déploiement ou extraction d'une spécification (810) qui organise l'activation des actions selon leurs dépendances, à utiliser pour orchestrer l'exécution de l'activation des actions ; dans lequel la spécification est construite pendant un moment de conception et la spécification inclut des déclarations d'ordre d'exécution statique explicite entre l'activation des actions afin de faire en sorte qu'elles s'exécutent séquentiellement ; dans lequel l'activation d'une action dépend de plusieurs autres activations des actions pour être prête avant d'être autorisée à s'exécuter ; dans lequel l'ordre d'activation des actions est en outre basé sur des données historiques d'exécutions précédentes ;
- réception d'une demande d'activation (820) ;
- mise en correspondance de la demande d'activation avec un flux spécifique d'activation des actions à exécuter conformément à la spécification (830) ; et
- exécution de la logique d'exécution du flux mis en correspondance d'activation des actions (840) ordonnées sur la base de leurs dépendances de données ;
dans lequel l'activation de l'action comprend en outre une logique d'annulation (550) et le moyen de code lisible par un ordinateur amène l'ordinateur à mettre en œuvre les étapes suivantes :
- exécution de la logique d'annulation, lorsque l'exécution de la logique d'exécution du flux de l'activation des actions a échoué (850) et décider qu'une action a échoué ;
- propagation d'informations d'échec d'action dans l'ordre du flux de l'activation des actions jusqu'à ce qu'elles aient atteint toutes les actions du flux (620a-d, 855) ;
- déclenchée par les informations d'échec d'action propagées, pour chaque action du flux d'activation des actions, en partant des dernières actions du flux de l'activation des actions et dans l'ordre opposé de l'ordre de démarrage d'exécution de la logique d'exécution, décision pour savoir s'il faut annuler sa logique d'exécution et le cas échéant exécution de la logique d'annulation (630, 860) ; et
- confirmation à son prédécesseur (640, 870) ce qui permet au prédécesseur d'exécuter sa logique d'annulation.

7. Produit programme informatique comprenant un support lisible par ordinateur et un programme informatique selon la revendication 6 stocké sur le support lisible par ordinateur.
